# EUROPÄISCHE PATENTSCHRIFT

(11) **EP 2 514 005 B1**
(45) Veröffentlichungstag und Bekanntmachung des Hinweises auf die Patenterteilung: **21.05.2014**
(21) Anmeldenummer: 10760268.2
(22) Anmeldetag: 29.09.2010
(51) Int. Cl.: H01M 2/20, H01R 11/28

(54) **FLEXIBLER ZELLVERBINDER**
FLEXIBLE CELL CONNECTOR
CONNECTEUR DE CELLULES FLEXIBLE

(30) Priorität: 17.12.2009 DE 102009058723
(43) Veröffentlichungstag der Anmeldung: 24.10.2012
(73) Patentinhaber: Amphenol-Tuchel Electronics GmbH, 74080 Heilbronn (DE)
(72) Erfinder: FILIPON, Sven, 74080 Heilbronn (DE); LANGHOFF, Wolfgang, 71229 Leonberg (DE)
(74) Vertreter: Wendels, Stefan
(86) Internationale Anmeldenummer: PCT/EP2010/005918
(87) Internationale Veröffentlichungsnummer: WO 2011/082722

(56) Entgegenhaltungen:
- WO-A1-2009/041735
- WO-A1-2010/142679
- DE-A1- 2 745 189
- DE-A1-102006 015 566
- JP-A- 2002 151 045
- US-A1- 2005 100 785

## Beschreibung

Die vorliegende Erfindung betrifft einen flexiblen Zellverbinder zur parallelen und/oder seriellen Kontaktierung, vorzugsweise mehrerer Energiespeichereinheiten eines Energiespeichers.

Die Erfindung betrifft insofern einen Zellverbinder gemäß Anspruch 1.

Energiespeicher werden beispielsweise in Kraftfahrzeugen, insbesondere mit Elektro,- oder Hybridantrieben eingesetzt.

Die Energiespeicher bestehen üblicherweise aus mehreren Zellen, die elektrisch miteinander verbunden sind. Insbesondere für Hybridfahrzeuge müssen sehr viele Zellen, sowohl parallel (zur Erhöhung der Kapazität) als auch seriell (zur Erhöhung der Spannung) miteinander verbunden werden zu einer Energiespeichereinheit. Bei der geforderten, kompakten Bauart der Energiespeicher kommt es beim Betrieb des Energiespeichers zu erheblichen Temperaturschwankungen, zumal die Umgebungstemperatur bei Fahrzeugen ebenfalls erheblichen Schwankungen unterzogen ist.

Darüber hinaus besteht das technische Problem, dass auf Grund der zu übertragenden hohen Ströme, entsprechende Leitungsquerschnitte vorgesehen werden müssen.

Ein weiteres technisches Problem stellen die beim Betrieb von Fahrzeugen auftretenden Vibrationen und Stöße dar, derart, dass sich die Zellen in einer Zellverbinderanordnung (oder allgemein in einem Energiespeicher) zueinander bewegen müssen.

Im Stand der Technik werden häufig massive Anschlussleitungen verwendet, die lösbar mittels einer Schraubverbindung am Anschluss einer Zelle verbunden werden.

Bedingt durch die unterschiedlichen elektrischen, mechanischen und elektrochemischen Eigenschaften der Metalle, ist es zusätzlich notwendig, ein Verbindungssystem zu schaffen, welche Anode und Kathode mit unterschiedlicher Kontaktierungsmöglichkeit versieht.

Der Erfindung liegt daher die Aufgabe zu Grunde, einen elektrischen Verbinder, sowie einen korrespondierenden Energiespeicher anzugeben, mit welchen, trotz der vorgenannten technischen Problemstellungen, ein sicherer Betrieb bei optimaler Materialverwendung und darüber hinaus einfacher Montage mit geringst möglicher Fehleranfälligkeit gewährleistet wird.

Flexible Kabelverbinder scheiden aus unterschiedlichen Gründen aus. Soll eine mechanisch, dauerhafte Verbindung zwischen einem Plus- und einem Minuspol zweier benachbarten Zellen hergestellt werden, so wird diese in der Praxis häufig als feste Verbindung anzubringen sein. Vibrationen führen dabei verstärkt zu Schäden und zum Lösen von Verbindungen wie Schraubverbindungen.

Ziel ist es, beispielsweise die Verbindung mittels eines Schweißverfahrens, vorzugsweise eines Ultraschall,- oder Laserschweißverfahrens zu bewerkstelligen.

Im Stand der Technik zeigt zum Beispiel die US 4, 934, 958 ein System zum Verbinden zweier Batteriezellen, welches über ein Kabel miteinander verbunden wird. Dies bedarf eines gewissen zusätzlichen Bauraums, weiterer Verbindungsmittel und Kabel, die notwendig sind, um eine entsprechende Verbindung zu schaffen.

Soll eine feste Verbindung hergestellt werden, so eignet sich ein rundes Kabel nicht zum Verschweißen der einzelnen Kontaktierungsanschlüsse eines Energiespeichers beziehungsweise der Energiespeicherzellen mit dem Kabel.

Die US 5, 154, 646 zeigt eine andere Möglichkeit, um Plus- und Minuspole einer Batteriezelle miteinander zu verbinden.

Hierbei wird ein Kupfernetzgewebe als Flachbandleitung mit Anschlüssen an dessen Ende verwendet, um die einzelnen Pole der Batteriezellen miteinander elektrisch zu kontaktieren.

Auch hier erfolgt die Verbindung mittels einer Schraubverbindung. Eine solche Verbindung ist aufwendig und teuer herzustellen und scheidet in vielen Applikationen mit einer hohen Anzahl von Zellverbindern aus Kostengründen bereits aus.

Ein weiterer Zellverbinder ist aus DE 10 2006 015 566 A1 bekannt.

Es ist daher Aufgabe der vorliegenden Erfindung, eine flexible Zellverbindung bereitzustellen, die einerseits kostengünstig und einfach herzustellen ist, dauerhaft mit den Zellverbinderanschlüssen kontaktiert werden kann und darüber hinaus auf einfache Weise herzustellen ist.

Anders ausgedrückt, liegt der Erfindung die Aufgabe zu Grunde, einen elektrischen Verbinder, sowie einen korrespondierenden Energiespeicher anzugeben, mit welchen, trotz der vorgenannten technischen Problemstellung, ein sicherer Betrieb bei optimaler Materialverwendung und darüber hinaus einfacher Montage mit geringst möglicher Fehleranfälligkeit gewährleistet wird.

Diese Aufgabe wird mit den Merkmalen des Anspruch1 gelöst.

Vorteilhafte Weiterbildungen der Erfindung sind in den Unteransprüchen angegeben.

In den Rahmen der Erfindung fallen auch sämtliche Kombinationen aus zumindest zwei von in der Beschreibung, den Ansprüchen und/oder den Figuren angegebenen Merkmalen.

Bei angegebenen Wertbereichen sollen auch innerhalb der genannten Grenzen liegende Werte als Grenzwerte offenbart gelten und in beliebiger Kombination beanspruchbar sein.

Der Erfindung liegt der Gedanke zu Grunde, ein flexibles Zellverbindersystem (ein flexibler Zellverbinder) vorzusehen, mit dem die Temperaturschwankungen und Bauteiletoleranzen ausgeglichen werden können und Längenänderungen durch Temperaturänderungen kompensiert werden können, was durch flexible Abschnitte des Zellverbinders bewerkstelligt werden muss.

Darüber hinaus muss berücksichtigt werden, dass die Längenänderungen und Bauteiltoleranzen in allen drei Raumrichtungen auftreten.

Der flexible, erfindungsgemäße Zellverbinder verfügt daher über ein Dreiachsentoleranzausgleichssystem, bei minimalem Materialeinsatz.

Toleranzen können insofern in x,- y,- und z-Richtung zueinander, sowie in jeder Raumrichtung auftreten.

In der Praxis hat sich gezeigt, dass es nicht ausreichend ist, Zellverbinderanordnungen bereit zu stellen, die lediglich in einer oder zwei Raumrichtungen Toleranzen und Längendehnungen durch Temperaturschwankungen abfangen können. Jede planmäßig in kauf zu nehmende Lageänderung der Zellen zueinander, ob durch Vibration oder thermisch bedingt, muss der Zellverbinder abfangen können.

Der erfindungsgemäße flexible Zellverbinder nach Anspruch 1, stellt somit eine Lösung vorbesagter Aufgabe dar.

Der flexible Zellverbinder wird aus einem dünnwandigen Blech geformt und verfügt über mindestens einen mit Vorteil im wesentlichen U,- oder L-förmigen Lamellenabschnitt, der als gewölbter und geschlitzter Lamellenabschnitt im Blech ausgebildet ist.

Mit Vorteil ist der flexible Zellverbinder aus einem dünnwandigen Blech, vorzugsweise aus einem walzplattierten Band gefertigt.

Besonders bevorzugt ist eine Ausführungsform, bei der die Kontaktierungsanschlüsse an die Pluspole und/oder die Minuspole anschweißbar sind.

In einer weiteren alternativen Ausführungsform weisen die Kontaktierungsanschlüsse eine Pluspolanschlussseite und eine Minuspolanschlussseite auf, wobei die Pluspolanschlussseite aus einem ersten Material, vorzugsweise Aluminium hergestellt ist und die Minuspolanschlussseite aus einem davon abweichenden Material, insbesondere Kupfer, ausgebildet ist.

Auf diese Weise ist lediglich eine Art von Kontaktierungsanschlüssen zu fertigen, welche sich sowohl an die Pluspol,- als auch an die Minuspolseite einer jeden Zelle anschließen lassen, was sich positiv auf die Produktionskosten der Kontaktierungsanschlüsse auswirkt.

Durch die technische Maßnahme, dass der erfindungsgemäße Zellverbinder über einen geschlitzten Lamellenabschnitt mit einer Vielzahl paarweise beabstandeter Lamellen verfügt, ist selbst bei starken Vibrationen oder Stößen und bei thermischen Längenänderungen eine sichere Verbindung zwischen den Kontaktierungsanschlüssen der Batteriezellen gewährleistet, da die Lageänderungen durch den flexiblen Zellverbinder abgefangen werden.

Soweit gleichzeitig eine materialschlüssige Verbindung der Kontaktierungsanschlüsse an Pluspol,- und/oder Minuspol der Energiespeichereinheiten (Zellen) erfolgt, beispielsweise durch Schweißen, ist auch hier eine Störung durch Trennen der elektrischen Verbindung praktisch ausgeschlossen und trotz der dauerhaften, formschlüssigen Verbindung eine Flexibilität des Systems gewährleistet. Als besonders wirksame Schweißtechnologie wird im vorliegenden Anwendungsfall das Widerstandsschweißen angesehen.

Weitere Vorteile, Merkmale und Einzelheiten der Erfindung ergeben sich aus der Beschreibung, bevorzugte Ausführungsbeispiele sowie anhand der Zeichnungen.
Diese zeigen:
Fig. 1 ein dünnwandiges Blech zur Herstellung des erfindungsgemäßen, flexiblen Zellverbinders;
Fig. 2 ein erster Verfahrensschritt in der Herstellung;
Fig. 3 ein zweiter Verfahrensschritt in der Herstellung des erfindungsgemäßen,
flexiblen Zellverbinders;
Fig. 4 einen erfindungsgemäßen, flexiblen Zellverbinder in der Ansicht von oben;
Fig. 5 einen flexibler Zellverbinder gemäß Fig. 4 in der Ansicht von unten.

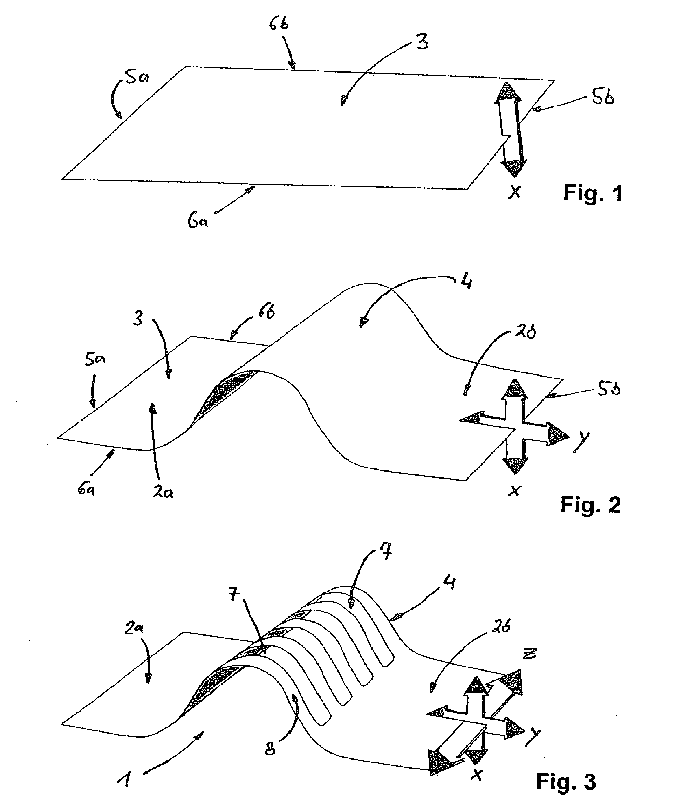

In den Figuren 1 bis 3 ist das erfindungsgemäße Prinzip erläutert, bei welchem der flexible Zellverbinder mit einer bestimmungsgemäßen Flexibilität in allen Raumrichtungen zerlegbar in Komponenten drei orthogonaler x,- y,- z-Achsen ausbildet wird.

Fig. 1 zeigt ein dünnwandiges Blech, welches entlang der x-Achse auf und ab bewegt werden kann. Wird eine solche Verbindung zwischen zwei Zellen eines Energiespeichers angebracht, so können sich diese praktisch nur in einer Richtung zueinander bewegen (x-Richtung).

Eine Bewegung in y,- und z-Richtung ist bedingt durch das massive dünnwandige Blech nahezu ausgeschlossen beziehungsweise nicht in ausreichendem Maße gewährleistet. Eine elastische Längenänderung eines Bleches ist deutlich geringer als die typischerweise in der Praxis auftretenden Lageänderungen.

Das in Fig. 1 gezeigte dünnwandige Blech 3 verfügt in Fig. 2 über einen Biegeabschnitt 4. Der Biegeabschnitt 4 ist mit Vorteil als ein im wesentlichen U-förmiger Biegeabschnitt ausgebildet.

Das dünnwandige Blech verfügt über zwei äußere Längsseitenkanten 6a, 6b und über zwei Stirnseitenkanten 5a, 5b. Der im wesentlichen u-förmige Biegeabschnitt 4 könnte alternativ auch als stufenförmiger oder L-förmiger Biegeabschnitt ausgebildet sein.
Hierdurch wird gewährleistet, dass sich das dünnwandige Blech 3 nunmehr in zwei zueinander orthogonaler Richtungen bewegen lässt, somit auch in y-Richtung. Zwischen dem Biegeabschnitt 4 und benachbart zu der Stimseitenkante 5a befindet sich ein erster Kontaktierungsabschnitt 2a und zwischen dem Biegeabschnitt und der Stimseitenkante 5b ein zweiter Kontaktierungsabschnitt 2b.

Verbindet man den in Fig. 2 gezeigte Zellverbinder mit den Polen zweier Zellen einer Energiespeichereinheit, so können diese in Folge von Wärmeausdehnung nun in x-, und y-Richtung entsprechend der Längenänderung ausweichen. Nicht möglich wäre jedoch eine Bewegung senkrecht zur xy-Ebene in z-Richtung, da das dünnwandige Blech 3 hierzu keine ausreichende Bewegungsfreiheit hat. Hierzu bedarf es weiterer Maßnahmen.

Erfindungsgemäß werden daher im Biegeabschnitt 4 Schlitze 7 unter Bildung von Lamellen 8 angebracht, so, dass eine Flexibilität in alle Raumrichtungen (x, y, z) möglich ist. Die Anzahl der Schlitze 7, die Breite und die Länge der Lamellen 8 ist entsprechend den abzufangenden Positionsänderungen, welche zu erwarten sind, abzustimmen.

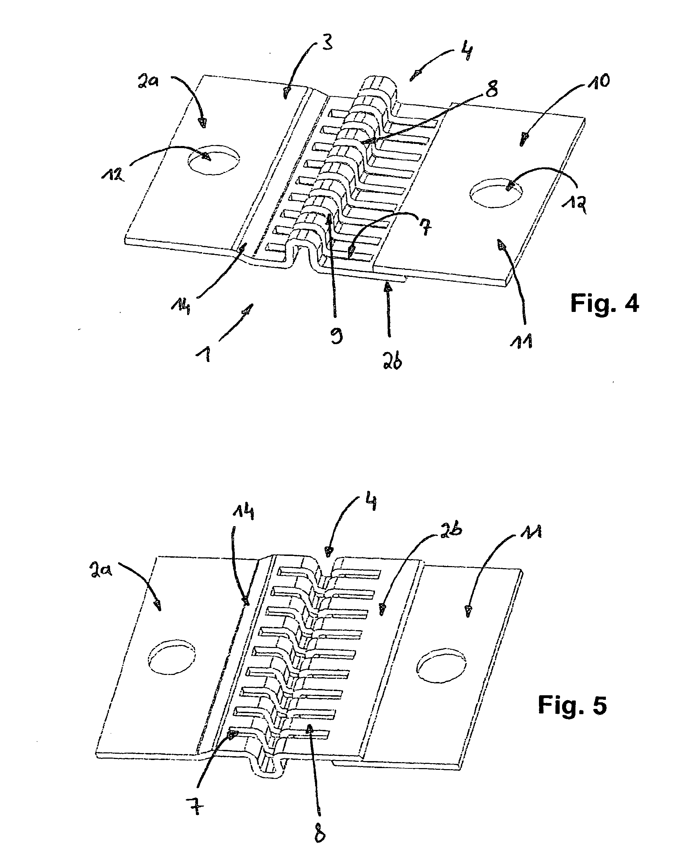

In Fig. 4 gezeigt, ist ein erstes Ausführungsbeispiel eines flexiblen Zellverbinders 1 gemäß der vorliegenden Erfindung, welche ausgebildet ist aus einem dünnwandigen Blech 3 mit einem flexiblen Lamellenabschnitt 9, gebildet aus einem Biegeabschnitt 4 und darin angeordneten Lamellen 8, die, wie zuvor beschrieben, durch Schlitze 7 getrennt sind.

Mit Vorteil besteht das dünnwandige Blech 3 aus Aluminium und ist an dessen zweiten Kontaktierungsabschnitt 2b mit einem im wesentlichen flachen, rechteckiges Metallblech 10, mit Vorteil ein Kupferblech, mittels eines Kalt-Schweißprozesses verbunden. Somit erhält man einen flexiblen Zellverbinder 1, welcher über einen ersten Kontaktierungsabschnitt 2a verfügt, aus einem ersten metallischen Material und über einen am zweiten Kontaktierungsabschnitt 2b angeformten Metallblech 10, welches aus einem davon unterschiedlichen Metall hergestellt ist.

Das Metallblech 10 weist mit Vorteil ein Loch 12 auf und bildet selbst einen Kontaktierungsabschnitt 11 für einen Zellverbinderpol aus.

In einer vorteilhaften Ausgestaltung kann das dünnwandige Blech 3 an seinem ersten Kontaktierungsabschnitt 2a ebenfalls mit einem Loch 12 ausgebildet werden. Dies hat den technischen Effekt, dass eine formschlüssige Verbindung mit den Kontaktierungsanschlüssen einer jeden Batteriezelle in vorteilhafter Weise durchgeführt werden kann.

Der geschlitzte Lamellenabschnitt 9 im Bereich des Biegeabschnitts 4 gewährleistet eine Beweglichkeit sowohl in x-, y-, als auch in z-Richtung des Lamellenverbinders.

In Fig. 5 ist eine Ansicht des erfindungsgemäßen, flexiblen Zellverbinders aus Fig. 4 von unten dargstellt. Hierbei sieht man, dass zwischen dem ersten, im wesentlichen flachen Kontaktierungsabschnitt 2a und dem Biegeabschnitts 4 eine Schräge 14 angeordnet ist, so dass die Ebenen des Kontaktierungsabschnitts 11 und des ersten Kontaktierungsabschnitts 2a in der gleichen y-, z-Ebenenlage angeordnet sind.

Die Länge der Schlitze lässt sich entsprechend so ausbilden, dass die Flexibilität in z-Richtung die notwendigen Schwankungsbreiten abdeckt. Die Flexibilität in y-, bis z-Richtung wird durch die Ausbildung des Biegeabschnitts bewerkstelligt.

Befinden sich beispielsweise die Kontaktierungsanschlüsse zweier benachbarter Zellen in unterschiedlicher Höhe, so könnte anstelle des U-förmigen Biegeabschnitts auch ein Stufenförmiger oder L-förmiger Biegeabschnitt verwendet werden, der so ausgebildet ist, dass sich der erste Kontaktierungsabschnitt 2a auf der Ebene eines ersten Kontaktanschlusses einer ersten Zelle befindet und der zweite Kontaktierungsabschnitt 11 sich auf der zweiten Ebene eines zweiten Kontaktierungsanschlusses einer zweiten Zelle befindet.

### Bezugszeichenliste

Flexibler Zellverbinder
- 1: flexibler Zellverbinder
- 2a: erster Kontaktierungsabschnitt
- 2b: zweiter Kontaktierungsabschnitt
- 3: dünnwandiges Blech
- 4: Biegeabschnitt
- 5a, 5b: Stirnseitenkanten
- 6a, 6b: Längsseitenkanten
- 7: Schlitze
- 8: Lamellen
- 9: geschlitzter Lamellenabschnitt
- 10: Metallblech
- 11: Kontaktierungsabschnitt
- 12, 13: Löcher
- 14: Schrägabschnitt

## Patentansprüche

1. Flexibler Zellverbinder (1) zum elektrischen Verbinden von Zellen eines Energiespeichers, bestehend aus einem Blech (3), wobei das Blech (3) über Längsseitenkanten (6a, 6b) und Stirnseitenkanten (5a, 5b) und benachbart zu den Stirnseitenkanten (5a, 5b) über Kontaktierungsabschnitte (2a, 2b) verfügt zum Kontaktieren mit den Anschlüssen einer Energiespeicherzelle und zwischen einem ersten Kontaktierungsabschnitt (2a) und einem zweiten Kontaktierungsabschnitt (2b) ein flexibler Biegeabschnitt (4) angeordnet ist, der mehrere im wesentlichen parallel verlaufende Schlitze (7) aufweist, **dadurch gekennzeichnet, dass** die Länge der Schlitze (7) so ausgebildet ist, dass diese über den gesamten Biegeabschnitt (4) verlaufen und sich darüber hinaus in Richtung der beiden Kontaktierungsabschnitte (2a, 2b) erstrecken.

2. Flexibler Zellverbinder (1) gemäß Anspruch 1, **dadurch gekennzeichnet, dass** der Biegeabschnitt (4) über eine Vielzahl paarweise beabstandeter Schlitze (7) unter Bildung von Lamellen (8) verfügt.

3. Flexibler Zellverbinder (1) nach Anspruch 1 oder 2, **dadurch gekennzeichnet, dass** die Schlitze eine Orientierung mit einem Winkel zwischen 0° und 25°, bezogen auf die Orientierung der Längsseitenkanten (6a, 6b) aufweisen.

4. Flexibler Zellverbinder (1) gemäß Anspruch 2 oder 3, **dadurch gekennzeichnet, dass** die Schlitze (7) im wesentlichen über die gesamte Breite des Zellverbinders (1) angeordnet sind.

5. Flexibler Zellverbinder (1) gemäß Anspruch 1 bis 4, **dadurch gekennzeichnet, dass** der Kontaktierungsabschnitt (2a) zum Kontaktieren mit einer ersten Zelle in der gleichen Ebene wie der Kontaktierungsabschnitt (2b) zum Kontaktieren mit einer zweiten Zelle angeordnet ist.

6. Flexibler Zellverbillder (1) gemäß einem der vorhergehenden Ansprüche, **dadurch gekennzeichnet, dass** in wenigstens einem der Kontaktierungsabschnitte (2a, 2b) ein Loch angeordnet ist.

7. Flexibler Zellverbinder (1) gemäß einem der vorhergehenden Ansprüche, **dadurch gekennzeichnet, dass** der Zellverbinder (1) im Bereich zwischen dem Kontaktierungsabschnitt (2a) und dem Biegeabschnitt (4) über eine Biegung in Form eines Schrägabschnitts (14) verfügt.

## Claims

1. Flexible cell connector (1) for electrically connecting cells of a energy store, comprising a metal sheet (3), wherein the metal sheet (3) has longitudinal side edges (6a, 6b) and end face edges (5a, 5b) and, adjacent to the end face edges (5a, 5b), contact-making sections (2a. 2b) for making contact with the connections of an energy storage cell, and a flexible bending section (4) is arranged between a first contact-making section (2a) and a second contact-making section (2b), the said flexible bending section having a plurality of slots (7) which extend substantially in parallel, **characterized in that** the length of the slots (7) is such that the said slots run over the entire bending section (4) and furthermore extend in the direction of the two contact-making sections (2a, 2b).

2. Flexible cell connector (1) according to Claim 1, **characterized in that** the bending section (4) has a large number of slots (7), which are spaced apart in pairs, so as to form laminations (8).

3. Flexible cell connector (1) according to Claim 1 or 2, **characterized in that** the slots are oriented at an angle of between 0° and 25° in relation to the orientation of the longitudinal side edges (6a, 6b).

4. Flexible cell connector (1) according to Claim 2 or 3, **characterized in that** the slots (7) are arranged substantially over the entire width of the cell connector (1).

5. Flexible cell connector (1) according to Claims 1 to 4, **characterized in that** the contact-making section (2a) for making contact with a first cell is arranged in the same plane as the contact-making section (2b) for making contact with a second cell.

6. Flexible cell connector (1) according to one of the preceding claims, **characterized in that** a hole is arranged in at least one of the contact-making sections (2a, 2b).

7. Flexible cell connector (1) according to one of the preceding claims, **characterized in that** the cell connector (1) has a bend in the form of an oblique section (14) in the region between the contact-making section (2a) and the bending section (4).

## Revendications

1. Connecteur de cellule flexible (1) pour la connexion électrique de cellules d'un accumulateur d'énergie, constitué d'une tôle (3), la tôle (3) disposant d'arêtes latérales longitudinales (6a, 6b) et d'arêtes latérales frontales (5a, 5b) et à côté des arêtes latérales frontales (5a, 5b) de portions de contact (2a, 2b), pour la mise en contact avec les bornes d'une cellule d'accumulation d'énergie et une portion courbe flexible (4) étant disposée entre une première portion de contact (2a) et une deuxième portion de contact (2b), laquelle présente plusieurs fentes (7) s'étendant essentiellement parallèlement, **caractérisé en ce que** la longueur des fentes (7) est réalisée de telle sorte que celles-ci s'étendent sur toute la section courbe (4) et s'étendent en outre dans la direction des deux portions de contact (2a, 2b).

2. Connecteur de cellule flexible (1) selon la revendication 1, **caractérisé en ce que** la section courbe (4) dispose d'une pluralité de fentes (7) espacées par paires en formant des lamelles (8).

3. Connecteur de cellule flexible (1) selon la revendication 1 ou 2, **caractérisé en ce que** les fentes présentent une orientation avec un angle compris entre 0° et 25°, par rapport à l'orientation des arêtes latérales longitudinales (6a, 6b).

4. Connecteur de cellule flexible (1) selon la revendication 2 ou 3, **caractérisé en ce que** les fentes (7) sont disposées essentiellement sur toute la largeur du connecteur de cellule (1).

5. Connecteur de cellule flexible (1) selon les revendications 1 à 4, **caractérisé en ce que** la portion de contact (2a) est prévue pour venir en contact avec une première cellule dans le même plan que la portion de contact (2b) pour la mise en contact avec une deuxième cellule.

6. Connecteur de cellule flexible (1) selon l'une quelconque des revendications précédentes, **caractérisé en ce qu'**un trou est disposé dans au moins l'une des portions de contact (2a, 2b).

7. Connecteur de cellule flexible (1) selon l'une quelconque des revendications précédentes, **caractérisé en ce que** le connecteur de cellule (1) dispose d'une partie courbe en forme de portion biseautée (14) dans la région entre la portion de contact (2a) et la portion courbe (4).
